# EUROPEAN PATENT SPECIFICATION

(11) **EP 1 107 196 B1**
(45) Date of publication and mention of the grant of the patent: **21.03.2007**
(21) Application number: 99124577.0
(22) Date of filing: 09.12.1999
(51) Int. Cl.: G07F 7/08, G07F 7/10

(54) **A wireless electronic system for performing transactions**
Elektronisches drahtloses System zur Durchführung von Transaktionen
Système électronique sans fil pour effectuer des transactions

(43) Date of publication of application: 13.06.2001
(73) Proprietor: Al-Khaja, Ali Hassan, Tubli 711 (BH)
(72) Inventor: Al-Khaja, Ali Hassan, Tubli 711 (BH)
(74) Representative: Haft, von Puttkamer, Berngruber

(56) References cited:
- EP-A- 0 785 534
- EP-A- 0 950 968
- WO-A-94/27258
- WO-A-97/41499
- WO-A-97/45814

## Description

The present invention relates to a method for performing purchases and banking operations and other financial transactions wirelessly and electronically, an "on-air commerce" method so to speak, and to a device for carrying out this method.

Methods for completing transactions electronically are known. When buyer and seller are not in the same place, the buyer's data are usually passed on to the seller via the Internet. Such data contain e.g. the buyer's credit card number or account number, name and further personal information which can easily be abused by unauthorized persons.

There are further variants for completing purchases and banking operations electronically which require the presence of both parties on the spot. For this purpose, shops or department stores must be equipped with special terminals which read the customer's credit card or bank card and verify this information by means of a connection with a central computer of the credit card enterprise or bank. The customer must then confirm the transaction with his signature or his personal identity number (PIN), these entries also being checked.

It is also possible to use a smart card with an integrated circuit and its own processor capacity that can be recharged with an amount, the desired amount then being deducted directly from the smart card after a PIN has been entered. This also requires special devices nowadays for charging the smart card and transferring money from the smart card.

Methods have also recently been developed that permit transactions to be made by means of rechargeable smart cards and GSM cellular phones. One can thereby transfer a desired amount from one's own bank account to one's own smart card and vice versa. It is also known to transfer money from one cellular phone to another.

Such known methods are discloses in the European Patent Application EP 0 950 968.

Some of the abovementioned methods have relatively low acceptance in several countries because the purchase of the special devices is very expensive. Furthermore, not all potential buyers and sellers are willing to use such electronic methods due to the rapid development of technology. Many people around the world still regard cash or checks as the "safest" and most trustworthy means of payment.

The present invention is therefore based on the problem of providing a method for ensuring cordless, simple and safe completion of transactions without any special devices tied to a certain place. In contrast to "online commerce", the invention has the objective of introducing "on-air commerce".

A further object of the present invention is to provide a method for transferring a certain money amount from a smart card or from a bank account to a target account by using a mobile communication device.

The inventive method should also be employable independently of time and place.

These problems are solved according to the invention by the features of claim 1. Further embodiments of the invention can be found in the subclaims.

It is accordingly proposed that every type of financial transaction is completed using a mobile communication device in combination with one smart card and optionally a printer device.
According to the present invention, an amount can be transferred with a mobile communication device from the user's smart card or the user's account to a desired target account, e.g. the account of a seller present on the spot.

For this purpose the user's smart card is inserted into a read-write unit of the mobile communication device. The user is then asked to enter a PIN stored on the smart card via the keys of the device. After the PIN has been entered for activating the smart card, the service provider's number stored on the smart card is dialed and a connection made. The service provider is in this case preferably the user's bank.

Then the user's relevant data stored on the smart card in encrypted form are passed on to the service provider together with a time signal. These data can be the account number, card number and/or expiration date of the smart card. When the data have been transferred the user is asked to enter his PIN for his bank account and the desired amount to be transferred to the target account. This entry must take place within a certain time interval, otherwise the transaction is invalid. To increase security, a digital signature can be created and passed on to the service provider.

When this information has been checked by the service provider, the read-write unit of the mobile communication device is activated and the amount of money is transferred from the user's smart card or from the user's account to the desired target account.

Alternatively an Internet connection can be set up and the service provider's website used for entering these data. In such a case the necessary software is stored on the smart card.
The device can be provided according to the invention with an external or internal module containing a printer unit and paper. The paper can also be special paper with security features such as watermarks.

The transaction amounts for most credit cards and checks such as eurochecks are limited. In contrast to these methods, the present invention offers maximum security and flexibility.

Furthermore, the invention is very advantageous for banking institutes since less personnel is needed.

In order to increase the security features of the inventive method further, one can use biometric identification and authentication methods. It is e.g. possible to use an internal or external fingerprint reading device and have the service provider check these data.

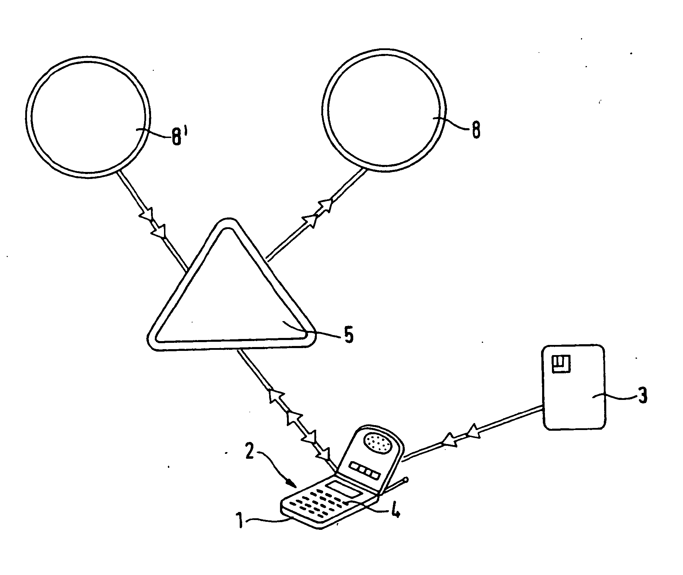

The invention will be explained in more detail in the following with reference to the figure which schematically shows a schematic view of a variant of the inventive method.

As shown in the Figure, the present invention makes it possible to transfer a certain amount from the buyer's smart card or the buyer's account 8' to another account 8, e.g. a seller's account. This requires the following steps:

According to the Figure, the buyer's smart card 3 is inserted into read-write unit 1 of mobile communication device 2. The mobile communication device shown in the figure is a common cellular phone, but a notebook computer and other devices suitable for mobile communication can also be used. The buyer is then optionally asked to enter a PIN stored on smart card 3 via dialing keyboard 4 of device 2.

Then a telephonic GSM connection to the buyer's service provider 5 is made by dialing the service provider's number. This takes place automatically but can also be done manually by the buyer. The service provider is in this case preferably the buyer's bank but can also be a credit card institute or further service enterprise.

In a variant not shown here, the connection is an Internet connection, in which case the Internet software is implemented on the smart card. The connection can also be made via satellite or any other suitable method.

Then the buyer's relevant data stored on smart card 3 in encrypted form are passed on to service provider 5. The data expediently contain the buyer's account number, card number and/or expiration date of the smart card. For security reasons the data are provided with the time and date so that timing can be performed.

When the data have been transferred the user is asked, according to the invention, to enter his PIN for his bank account and the desired amount to be transferred to the target account 8. This entry must take place within a certain time interval or else the transaction is invalid, which increases the transaction security.

When this information has been checked by the service provider, the read-write unit of the mobile communication device is activated and the amount of money is transferred from the user's smart card 3 or from the buyer's account 8' to the desired target account 8.

This makes it possible to perform transactions with only one device independently of place.

When the transaction has been completed a transaction record is printed by device's printer if desired. The record can additionally contain information about the account's balance. The Printer can be an external module; it is also possible to provide the mobile communication device with an internal printer.

To increase security, the transactions described above can be confirmed using a digital signature which is transmitted with the relevant data. The time signal sent serves as a further security aspect since the transaction is interrupted if a certain time interval is exceeded between the passing on of the time signal and the following step.

Entry of the PIN codes can be replaced by a check of biometric features such as fingerprints.

According to the invention, the user of the method presented here can determine the type of transaction to be completed using the keyboard of his mobile communication device. The corresponding menu software can be deposited on the smart card and/or with the service provider. In addition, it is possible to fix an upper limit for the particular transaction amount or for the sum of all transaction amounts within a certain time period. This is important in particular if inexperienced persons, e.g. teenagers, are using the inventive method.

In order to increase the transaction security for all users of the inventive method and especially in order to avoid abuse by not authorized persons the present invention provides the possibility to use a further smart-card, containing in encrypted form several combinations of digits/letters identifying all service providers participating to the "on air" system. These combinations of digits/letters are for security reasons unknown to the users.

In order to check the validity of the transaction, a user e.g. a seller can insert his so called "verification" smart card into the read/write unit of the GSM-device. Then the bank (or the service provider) sends his identification code which is compared with the code (combination of digits/letters) stored on the seller's verification smart card. The comparison is done by the software stored on the verification card, so that any manipulation can be excluded.

After a successful comparison of the codes the transaction can be continued.

Additionally or alternatively the verification smart card can contain the user's name and a second letter/digit combination identifying the user. Thus the service provider has to return to the mobile communication device the combination of letters and/or digits identifying the seller. Also in this case the comparison is done by the smart card of the seller. This feature guarantees that the service provider connected with the GSM-device is an authorized one, since he knows the second combination of letters and/or digits identifying the seller to the "on air system".

To facilitate the handling the functionality of the verification smart card can be built in the other "transaction" Smart-Card 3.

## Claims

1. A method for electronic wireless completion of purchases and other financial transactions using a mobile communication device, comprising the steps:
inserting a smart card (3) into a read-write unit (1) of the mobile communication device (2);
making a connection with a service provider (5) by dialing a number;
passing on to the service provider (5) the user's relevant data stored on the smart card (3) in encrypted form together with a time signal;
entering a PIN for an account (8') kept with the service provider (5) and an amount of money to be transferred and/or the desired type of transaction, these data being provided with a time signal;
confirming the transaction by means of a digital signature, the method being **characterized by** the following steps:
entering a target account number for a target account (8) by means of the keyboard (4) of the mobile communication device (2);
checking the entries through the service provider (5); and
activating the read-write unit (1) of the mobile communication device (2) and transferring the amount of money from the user's smart card (3) or from the user's account (8') to the desired target account (8).

2. A method according to claim 1, wherein a transaction record is printed after each transaction by means of a printer unit (7) connected with the mobile communication device (2).

3. A method according to claim 2, wherein the transaction record contains information about the user's account balance.

4. A method according to any of the above claims, wherein the number of the service provider (5) is stored on the smart card (3) and dialed automatically.

5. A method according to any of the above claims, wherein the connection is a telephone connection, a satellite connection, an Internet connection or any other suitable connection.

6. A method according to any of the above claims, wherein the transaction is interrupted if a certain time interval is exceeded between the passing on of the time signal and the subsequent step.

7. A method according to any of the above claims, wherein the smart card (3) inserted into the read-write unit (1) is activated by entering a PIN stored on the smart card by means of the keyboard (4) of the device (2).

8. A method according to any of the above claims, wherein the genuineness of the connection with the service provider is checked by means of a verification smart card inserted into the read-write unit (1) and containing number-letter combinations clearly identifying one or more service providers (5) and unknown to the users, comprising the following additional steps:
inserting the verification smart card into the read-write unit (1) of the mobile communication device (2);
asking the service provider to transmit its number-letter combination;
comparing the service provider's entry with the data stored on the verification smart card, and if there is a match
continuing the transaction.

9. A method according to claim 8 wherein the verification smart card additionally contains the user's name and a number-letter combination identifying him, **characterized in that** the service provider (5) is asked to pass on the number-letter combination corresponding to the user's name to the mobile communication device (2) which is subsequently compared with that stored on the verification smart card.

10. A method according to claim 8 or 9, **characterized in that** the function of the verification smart card is performed by the transaction smart card (3).

## Patentansprüche

1. Methode zur elektronischen, drahtlosen Abwicklung von Einkäufen und anderen finanziellen Transaktionen unter verwendung eines mobilen Kommunikationsgeräts, folgende Schritte umfassend:
Einführen einer Smartcard (3) in eine Lese-Schreib-Einheit (1) des mobilen Kommunikationsgeräts (2);
Herstellen einer Verbindung zu einem Dienstanbieter (5) durch Wählen einer Nummer;
Weitergeben der auf der Smartcard (3) gespeicherten relevanten Daten des Benutzers in verschlüsselter Form gemeinsam mit einem Zeitsignal an den Dienstanbieter (5);
Eingeben eines PINs für ein beim Dienstanbieter (5) geführtes Konto (8') und eines zu überweisenden Geldbetrags und/oder der gewünschten Transaktionsart, wobei diese Daten mit einem Zeitsignal versehen sind;
Bestätigen der Transaktion mittels einer digitalen Signatur, wobei die Methode durch die folgenden Schritte **gekennzeichnet** ist:
Eingeben einer Zielkontonummer für ein Zielkonto (8) über eine Tastatur (4) des mobilen Kommunikationsgeräts (2);
Prüfen der Eingaben durch den Dienstanbieter (5); und
Aktivieren der Lese-Schreib-Einheit (1) des mobilen Kommunikationsgeräts (2) und Überweisen des Geldbetrags von der Smartcard (3) des Benutzers oder vom Benutzerkonto (8') auf das gewünschte Zielkonto (8).

2. Methode gemäß Anspruch 1, wobei nach jeder Transaktion mit einer Druckereinheit (7), die mit dem mobilen Kommunikationsgerät (2) verbunden ist, eine Transaktionsbestätigung gedruckt wird.

3. Methode gemäß Anspruch 2, wobei die Transaktionsbestätigung Informationen über den Saldo des Benutzerkontos enthält.

4. Methode gemäß einem der vorangehenden Ansprüche, wobei die Nummer des Dienstanbieters (5) auf der Smartcard (3) gespeichert ist und automatisch gewählt wird.

5. Methode gemäß einem der vorangehenden Ansprüche, wobei die Verbindung eine Telefonverbindung, eine Satellitenverbindung, eine Internetverbindung oder eine andere geeignete Verbindung ist.

6. Methode gemäß einem der vorangehenden Ansprüche, wobei die Transaktion unterbrochen wird, wenn ein bestimmtes Zeitintervall zwischen der Weitergabe des Zeitsignals und dem nächsten Schritt überschritten wird.

7. Methode gemäß einem der vorangehenden Ansprüche, wobei die in die Lese-Schreib-Einheit (1) eingeführte Smartcard (3) durch die Eingabe eines auf der Smartcard gespeicherten PINs über die Tastatur (4) des Geräts (2) aktiviert wird.

8. Methode gemäß einem der vorangehenden Ansprüche, wobei die Authentizität der Verbindung zum Dienstanbieter mit Hilfe einer Verifizierungs-Smartcard geprüft wird, die in die Lese-Schreib-Einheit (1) eingeführt ist und Ziffern-Buchstaben-Kombinationen enthält, die einen oder mehrere Dienstanbieter (5) eindeutig identifiziert und den Benutzern unbekannt ist, folgende zusätzliche Schritte umfassend:
Einführen der Verifizierungs-Smartcard in die Lese-Schreib-Einheit (1) des mobilen Kommunikationsgeräts (2);
Aufforderung an den Dienstanbieter, seine Ziffern-Buchstaben-Kombination zu senden;
Vergleichen der Eingaben des Dienstanbieters mit den auf der Verifizierungs-Smartcard gespeicherten Daten, und im Falle der Übereinstimmung
Fortsetzung der Transaktion.

9. Methode gemäß Anspruch 8, wobei die Verifizierungs-Smartcard zusätzlich den Namen des Benutzers und eine diesen identifizierende Ziffern-Buchstaben-Kombination enthält, **dadurch gekennzeichnet, dass** der Dienstanbieter (5) aufgefordert wird, die Ziffern-Buchstaben-Kombination entsprechend dem Benutzernamen auf das mobile Kommunikationsgerät (2) zu übertragen, die anschließend mit der auf der Verifizierungs-Smartcard gespeicherten Kombination verglichen wird.

10. Methode gemäß Anspruch 8 oder 9, **dadurch gekennzeichnet, dass** die Funktion der Verifizierungs-Smartcard von der Transaktions-Smartcard (3) wahrgenommen wird.

## Revendications

1. Procédé pour l'exécution électronique sans fil d'achats et autres transactions financières à l'aide d'un appareil de communications mobile, comprenant les étapes suivantes :
insertion d'une carte à puce (3) dans une unité de lecture-écriture (1) de l'appareil de communications mobile (2) ;
établissement d'une connexion avec un prestataire de services (5) en composant un numéro ;
transmission au prestataire de services (5) des données pertinentes de l'utilisateur, stockées sur la carte à puce (3), sous une forme cryptée, avec un signal d'heure ;
saisie d'un code personnel pour un compte (8') détenu chez le prestataire de services (5) et d'une quantité d'argent à transférer et/ou du type souhaité de transaction, lesquelles données sont accompagnées d'un signal d'heure ;
conformation de la transaction au moyen d'une signature numérique, lequel procédé est **caractérisé par** les étapes suivantes :
saisie d'un numéro de compte destinataire pour un compte destinataire (8) au moyen du clavier (4) de l'appareil de communications mobile (2) ;
contrôle des entrées par le prestataire de services (5) ; et
activation de l'unité de lecture-écriture (1) de l'appareil de communications mobile (2) et transfert du montant d'argent de la carte à puce (3) de l'utilisateur ou du compte de l'utilisateur (8') sur le compte destinataire (8) souhaité.

2. Procédé selon la revendication 1, **caractérisé en ce qu'**un enregistrement de transaction est imprimé après chaque transaction au moyen d'une unité d'impression (7) connectée à l'appareil de communications mobile (2).

3. Procédé selon la revendication 2, **caractérisé en ce que** l'enregistrement de transaction contient des information sur le solde du compte de l'utilisateur.

4. Procédé selon une ou plusieurs des revendications précédentes, **caractérisé en ce que** le numéro du prestataire de services (5) est enregistré sur la carte à puce (3) et composé automatiquement.

5. Procédé selon une ou plusieurs des revendications précédentes, **caractérisé en ce que** la connexion est une liaison de téléphonie, une liaison par satellite, un accès à Internet ou toute autre connexion appropriée.

6. Procédé selon une ou plusieurs des revendications précédentes, **caractérisé en ce que** la transaction est interrompue si un certain intervalle de temps est dépassé entre la transmission du signal d'heure et l'étape suivante.

7. Procédé selon une ou plusieurs des revendications précédentes, **caractérisé en ce que** la carte à puce (3) insérée dans l'unité de lecture-écriture (1) est activée par la saisie d'un code personnel enregistré sur la carte à puce au moyen du clavier (4) de l'appareil (2).

8. Procédé selon une ou plusieurs des revendications précédentes, **caractérisé en ce que** l'authenticité de la connexion avec le prestataire de services est vérifiée au moyen d'une carte à puce de vérification insérée dans l'unité de lecture-écriture (1) et contenant des combinaisons de chiffres et de lettres identifiant clairement un ou plusieurs prestataires de services (5) et inconnues des utilisateurs, comprenant en outre les étapes suivantes :
insertion de la carte à puce de vérification dans l'unité de lecture-écriture (1) de l'appareil de communications mobile (2) ;
demande au prestataire de services qu'il transmette sa combinaison de chiffres et de lettres ;
comparaison de l'entrée du prestataire de services avec les données stockées sur la carte à puce de vérification ; et, si elles concordent,
poursuite de la transaction.

9. Procédé selon la revendication 8 dans lequel la carte à puce de vérification contient en outre le nom de l'utilisateur et une combinaison de chiffres et de lettres qui l'identifie, **caractérisé en ce que** le prestataire de services (5) est invité à transmettre à l'appareil de communications mobile (2) la combinaison de chiffres et de lettres correspondant au nom de l'utilisateur, qui est ensuite comparée à celle qui est stockée sur la carte à puce de vérification.

10. Procédé selon la revendication 8 ou 9, **caractérisé en ce que** la fonction de la carte à puce de vérification est assurée par la carte à puce de transaction (3).
